# EUROPEAN PATENT APPLICATION

(11) **EP 4 769 400 A1**
(43) Date of publication of application: **01.07.2026**
(21) Application number: 25198974.5
(22) Date of filing: 29.08.2025
(51) Int. Cl.: G11B 27/031, G06T 11/60, G11B 27/34

(54) **CONTENT GENERATION METHOD AND APPARATUS, ELECTRONIC DEVICE AND STORAGE MEDIUM**

(30) Priority: 24.12.2024 CN 202411920549
(71) Applicant: Beijing Zitiao Network Technology Co., Ltd., Beijing 100190 (CN)
(72) Inventor: HUANG, Bin, Beijing, 100028 (CN); LIU, Yuling, Beijing, 100028 (CN)
(74) Representative: Marks & Clerk LLP

(57) **Abstract**

Embodiments of the present disclosure provide a content generation method and apparatus, an electronic device and a storage medium. A target viewing angle is determined in response to a user operation, where the target viewing angle is configured to represent an observation viewing angle in a target state; an image medium is acquired, and a content generation model is invoked to process the image medium based on the target viewing angle to generate viewing angle effect content, where the viewing angle effect content has an effect video frame, and the effect video frame is configured to display a visual effect of observing the image medium based on the target viewing angle. A target viewing angle representing an observation viewing angle of a target observation object is determined, and an image generation model is invoked by using the target viewing angle as input to process an image medium to generate viewing angle effect content, thereby realizing video generation based on the viewing angle dimension, and improving the quality of the generated video.

## Description

### TECHNICAL FIELD

Embodiments of the present disclosure relate to the technical field of artificial intelligence generated content, and in particular, to a content generation method and apparatus, an electronic device and a storage medium.

### BACKGROUND

At present, interactive image generation based on artificial intelligence (AI) technology has become an increasingly popular way of content creation. Users may input description words to generate corresponding videos by using the generation capability of artificial intelligence models, which greatly improves the efficiency of content creation.

In the related art, a video generation technology based on an AI model requires users to describe video frame content through complex description words, so as to generate a corresponding video. However, the design of description words requires users to have high model operation experience, and it is difficult for general users to quickly implement reasonable and accurate description word input.

Therefore, the scheme of making effect videos based on AI technology in the related art has the problems of low video generation efficiency and difficulty in meeting users' expectations on video quality.

### SUMMARY

Embodiments of the present disclosure provide a content generation method and apparatus, an electronic device and a storage medium to overcome the problems of low video generation efficiency and difficulty in meeting users' expectations on video quality.

In a first aspect, an embodiment of the present disclosure provides a content generation method, including:
determining a target viewing angle in response to a user operation, where the target viewing angle is configured to represent an observation viewing angle in a target state; and acquiring an image medium, and invoking a content generation model to process the image medium based on the target viewing angle, to generate viewing angle effect content, where the viewing angle effect content has an effect video frame, and the effect video frame is configured to display a visual effect of observing the image medium based on the target viewing angle.
In a second aspect, an embodiment of the present disclosure provides a content generation apparatus, including:
an interaction module, configured to determine a target viewing angle in response to a user operation, where the target viewing angle is configured to represent an observation viewing angle in a target state; and
a generation module, configured to acquire an image medium, and invoke a content generation model to process the image medium based on the target viewing angle, to generate viewing angle effect content, where the viewing angle effect content has an effect video frame, and the effect video frame is configured to display a visual effect of observing the image medium based on the target viewing angle.
In a third aspect, an embodiment of the present disclosure provides an electronic device, including: a processor and a memory;
the memory stores a computer-executed instruction; and
the processor executes the computer-executable instruction stored in the memory, to cause the at least one processor to execute the content generation method according to the above first aspect and various possible designs of the first aspect.
In a fourth aspect, an embodiment of the present disclosure provides a computer-readable storage medium, where the computer readable storage medium stores a computer-executable instruction, and when a processor executes the computer-executable instruction, the content generation method according to the above first aspect and various possible designs of the first aspect is implemented.
In a fifth aspect, an embodiment of the present disclosure provides a computer program product, including a computer program, and when the computer program is executed by a processor, the content generation method according to the above first aspect and various possible designs of the first aspect is implemented.
According to the content generation method and apparatus, the electronic device and the storage medium provided by the embodiments, a target viewing angle is determined in response to a user operation, where the target viewing angle is configured to represent an observation viewing angle in a target state; an image medium is acquired, and a content generation model is invoked to process the image medium based on the target viewing angle to generate viewing angle effect content, where the viewing angle effect content has an effect video frame, and the effect video frame is configured to display a visual effect of observing the image medium based on the target viewing angle. A target viewing angle representing an observation viewing angle of a target observation object is determined in response to a user operation, and then an image generation model is invoked by using the target viewing angle as input to process an image medium to generate viewing angle effect content including a visual effect of observing the image medium based on the observation viewing angle of the target observation object, thereby realizing video generation based on the viewing angle dimension. In this process, the user does not need to input too complex description words, so that the efficiency of video generation may be effectively improved. Meanwhile, the generated viewing angle effect content is a video generated by the content generation model based on its understanding of the observation viewing angle of the target observation object, so that the generated video has better content consistency and higher authenticity, and the quality of the generated video is improved.

### BRIEF DESCRIPTION OF THE DRAWINGS

In order to more clearly illustrate the technical solutions in the embodiments of the present disclosure or in the related art, the drawings required in describing the embodiments or the related art will be briefly introduced below. Obviously, the drawings in the following description are some embodiments of the present disclosure, and for those of ordinary skill in the art, other drawings may also be acquired according to these drawings without paying any creative efforts.
Fig. 1 is an application scenario diagram of a content generation method provided by an embodiment of the present disclosure;
Fig. 2 is a first schematic flowchart of a content generation method provided by an embodiment of the present disclosure;
Fig. 3 is a schematic diagram of a first page provided by an embodiment of the present disclosure;
Fig. 4 is a flowchart of a specific implementation of step S101 in the embodiment shown in Fig. 2;
Fig. 5 is a schematic diagram of an effect content page provided by an embodiment of the present disclosure;
Fig. 6 is a flowchart of another specific implementation of step S101 in the embodiment shown in Fig. 2;
Fig. 7 is a schematic diagram of a second page provided by an embodiment of the present disclosure;
Fig. 8 is a flowchart of a specific implementation of step S1013 in the embodiment shown in Fig. 6;
Fig. 9 is a schematic diagram of generating viewing angle effect content provided by an embodiment of the present disclosure;
Fig. 10 is a second schematic flowchart of a content generation method provided by an embodiment of the present disclosure;
Fig. 11 is a structural block diagram of a content generation apparatus provided by an embodiment of the present disclosure;
Fig. 12 is a schematic structural diagram of an electronic device provided by an embodiment of the present disclosure; and
Fig. 13 is a schematic diagram of a hardware structure of an electronic device provided by an embodiment of the present disclosure.

### DETAILED DESCRIPTION OF EMBODIMENTS

In order to make the objectives, technical solutions and advantages of the embodiments of the present disclosure clearer, the technical solutions in the embodiments of the present disclosure will be clearly and completely described below in combination with the drawings in the embodiments of the present disclosure. Obviously, the described embodiments are part of the embodiments of the present disclosure, but not all of the embodiments. Based on the embodiments in the present disclosure, all other embodiments obtained by those of ordinary skill in the art without paying any creative efforts belong to the protection scope of the present disclosure.

It should be noted that the user information (including but not limited to user device information, user personal information, etc.) and data (including but not limited to data for analysis, stored data, displayed data, etc.) involved in the present disclosure are information and data authorized by the user or fully authorized by all parties, and the collection, use and processing of relevant data need to comply with relevant laws, regulations and standards of relevant countries and regions, and provide corresponding operation entrance for the user to choose authorization or rejection.

The application scenarios of the embodiments of the present disclosure are explained as follows:
The content generation method provided by the embodiments of the present disclosure may be applied to applications (APP) with video generation and video production functions, such as short video applications, video editing applications, etc. More specifically, it may be applied to an image-to-video, video effect adding and video continuation (video-to-video) based on an AI model. The execution body of this embodiment may be a terminal device running the above-mentioned application with the video generation function, or a server deploying a server side corresponding to the above-mentioned application, or other electronic devices playing a similar role. When the execution body is a terminal device, the terminal device runs the above-mentioned application to execute the method provided by this embodiment; when the execution body is a server, the server side of the above-mentioned application with the video generation function may run partially or completely on the server, and the method provided by this embodiment is executed on the server side, while the terminal device runs the client of the application, with the server and the terminal device being based on the server-client communicate, so that the terminal device may obtain the execution result of the method provided by this embodiment and display it according to the needs.

In some embodiments, a terminal device or a server may implement the video generation method provided by the embodiments of the present disclosure by running various computer-executable instructions or computer programs. For example, the computer-executable instructions may be program-level commands, machine instructions or software instructions. The computer program may be a native program or a software module in an operating system; may be a local application, that is, a program that needs to be installed in the operating system to run, or may be a mini-program embedded in any APP, that is, a program running based on a browser environment. In summary, the above computer-executable instructions may be any form of instructions, and the above computer program may be any form of application, module or plugin, and the specific implementation form may be configured according to the needs. Further, in the process of implementing the video generation method provided by the embodiments of the present disclosure, the video generation device may execute the method by running computer-executable instructions or a computer program set locally, or may execute the method by invoking computer-executable instructions or a computer program set in an external server. In some embodiments, the server may be an independent physical server, a server cluster or a distributed system composed of multiple physical servers, or may be a cloud server that provides basic cloud computing services such as cloud services, cloud storage, cloud communication, cloud database, cloud computing, cloud functions, network services, middleware services, domain name services, security services, content delivery network (CDN), and big data and artificial intelligence platforms, where the cloud service may be an interactive processing service for the terminal device to invoke.

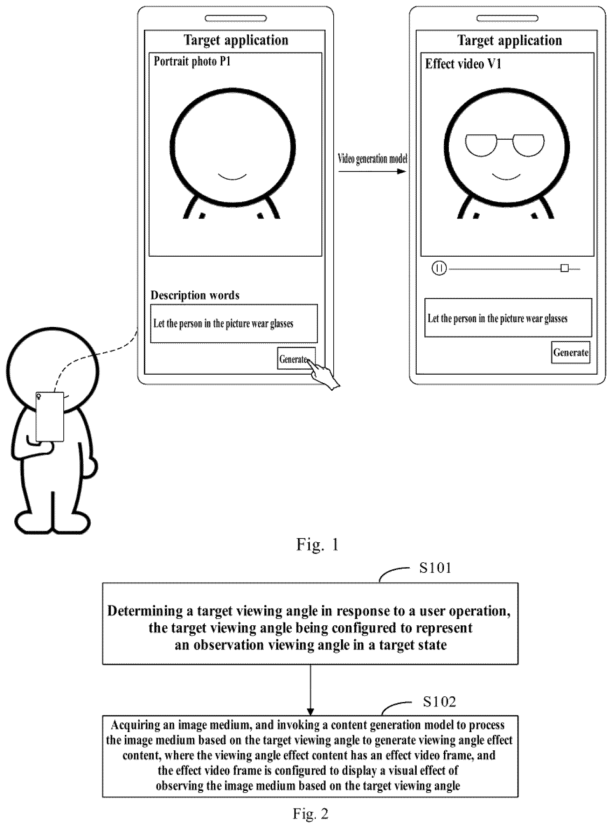

Fig. 1 is an application scenario diagram of a content generation method provided by an embodiment of the present disclosure. As shown in Fig. 1, taking a terminal device as an example, a target application with a video generation function is run on the terminal device side, and then a user may input an image medium to be processed and a description word by operating the target application, where, for example, the image medium is, for example, a picture, and the description word is, for example, a content description of an effect video to be generated. After that, based on the image medium and the description word, the terminal device invokes a content generation model implemented based on artificial intelligence generated content (AIGC) technology to generate an effect video or an effect picture combining the picture content and the content described by the description word. For example, as shown in the figure, the image medium is a portrait photo P1, and the content of the description word is "let the person in the picture wear glasses", then an effect video V1 is generated based on the image medium and the description word, and the content of the effect video is a process of the "person" in the above portrait photo performing an action of wearing glasses. The above example is a model-based image-to-video process. In another possible application scenario, the image medium input by the user may also be a video to be processed, and after the terminal device invokes the content generation model based on the video to be processed and the description word, an effect video combining the video content of the video to be processed and the content described by the description word is generated, which is also a model-based video-to-video process.

In the related art, in the above application scenario of video generation based on AIGC technology, users are usually required to describe video frame content through complex description words, so as to generate a corresponding video. For example, users need to describe the frame style, content change mode, etc. of the video frame. However, the design of description words requires users to have high model operation experience, and it is difficult for general users to quickly implement reasonable and accurate description word input, resulting in low video generation efficiency and difficulty in meeting users' expectations on video quality.

An embodiment of the present disclosure provides a content generation method to solve the above problems.

Referring to Fig. 2, Fig. 2 is a first schematic flowchart of a content generation method provided by an embodiment of the present disclosure. The method of this embodiment may be applied to a terminal device, and the content generation method includes:
step S101: determining a target viewing angle in response to a user operation, where the target viewing angle is configured to represent an observation viewing angle in a target state; and
step S102: acquiring an image medium, and invoking a content generation model to process the image medium based on the target viewing angle to generate viewing angle effect content, where the viewing angle effect content has an effect video frame, and the effect video frame is configured to display a visual effect of observing the image medium based on the target viewing angle.

Exemplarily, referring to the schematic diagram of the application scenario shown in Fig. 1, a terminal device runs a target application, such as a video editing APP, displays an interactive interface through the target application, and receives a user operation input by a user through the interactive interface, where a specific implementation of the user operation is implemented by a design mode of the interactive interface of the target application. In a possible implementation, the interactive interface of the target application includes a first page, the user operation includes a selection operation for the first page, and before step S101, the method further includes:
step S100A: displaying the first page, where effect components corresponding to at least two observation viewing angles are displayed in the first page.

Correspondingly, a specific implementation of step S101 includes: in response to the selection operation for a target effect component in the first page, determining an observation viewing angle corresponding to the target effect component as the target viewing angle.

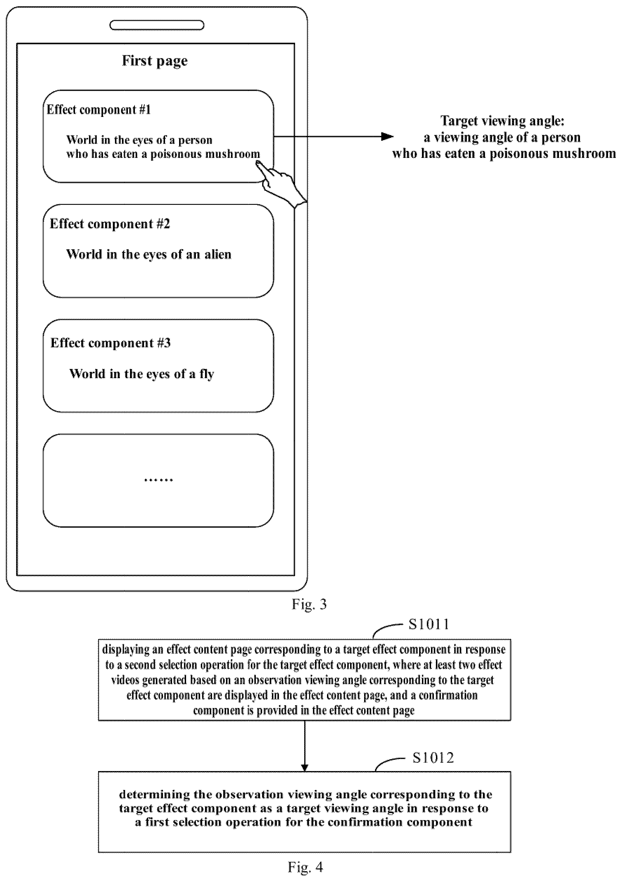

Exemplarily, the first page may be a home page of viewing angle effects, and in the first page, multiple effect components are provided, and each effect component corresponds to one observation viewing angle, so as to implement observation viewing angles in different states for the user to select. In a possible implementation, the target viewing angle includes an observation viewing angle of a target observation object, and the effect video frame is configured to display a visual effect of observing the image medium based on the observation viewing angle of the target observation object. Fig. 3 is a schematic diagram of a first page provided by an embodiment of the present disclosure. As shown in Fig. 3, exemplarily, an effect component #1, an effect component #2, an effect component #3, etc. are provided in the first page, where an observation viewing angle corresponding to the effect component #1 is "a viewing angle of a person who has eaten a poisonous mushroom", an observation viewing angle of the effect component #2 is "a viewing angle of an alien", and an observation viewing angle of the effect component #3 is "a viewing angle of a fly". A title of each effect component is a name of a corresponding observation object and a fixed description word "world in the eyes", that is, a title of the effect component #1 is "world in the eyes of a person who has eaten a poisonous mushroom", a title of the effect component #2 is "world in the eyes of an alien", and a title of the effect component #3 is "world in the eyes of a fly". A state corresponding to the observation viewing angle refers to a characteristic of the observation viewing angle. Therefore, the target viewing angle may be an observation viewing angle of the target observation object, such as "a viewing angle of a person who has eaten a poisonous mushroom", or may be a viewing angle that does not limit the target observation object but only limits an observation state, such as "a viewing angle after eating a poisonous mushroom". Taking the observation viewing angle corresponding to the effect component #1 as an example, the state corresponding to the observation viewing angle is a state of "eating a poisonous mushroom", and the observation viewing angle is "a human viewing angle". After combination, it is used as the target viewing angle, that is, "a viewing angle of a person who has eaten a poisonous mushroom". Further, when the user applies a selection operation to the first page, for example, selects the "effect component #1" in the first page as the target effect component, the terminal device takes the target viewing angle corresponding to the "effect component #1", that is, "a viewing angle of a person who has eaten a poisonous mushroom", as the target viewing angle used in the subsequent steps according to the selection operation.

Further, in a possible implementation, the selection operation includes a first selection operation and a second selection operation, that is, the selection operation includes two operation steps: the first selection operation and the second selection operation. Correspondingly, as shown in Fig. 4, a specific implementation of step S101 includes:
step S1011: in response to the second selection operation for the target effect component, displaying an effect content page corresponding to the target effect component, where at least two effect videos generated based on the observation viewing angle corresponding to the target effect component are displayed in the effect content page, and a confirmation component is provided in the effect content page; and
step S1012: in response to the first selection operation for the confirmation component, determining the observation viewing angle corresponding to the target effect component as the target viewing angle.

Exemplarily, after the first page is displayed, first, in response to the second selection operation for the target effect component, the effect content page corresponding to the target effect component is displayed, and multiple effect videos are displayed in the effect content page. Specifically, pictures such as first frames and video covers of the multiple effect videos are displayed in the effect content page, and the selected effect video may be played by further performing a click operation on the above pictures. The effect video is an effect video generated based on the observation viewing angle corresponding to the target effect component selected by the second selection operation.

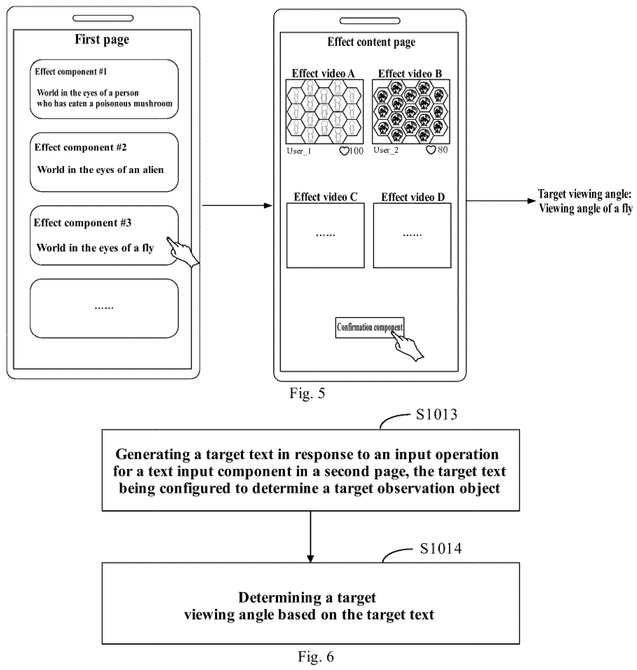

Fig. 5 is a schematic diagram of an effect content page provided by an embodiment of the present disclosure. As shown in Fig. 5, referring to the embodiment shown in Fig. 3, after the user applies the second selection operation (such as a click operation) to trigger the effect component #3, the effect content page corresponding to the effect component #3 is entered, and effect videos generated based on the observation viewing angle corresponding to the target effect component are displayed in the effect content page, such as an effect video A, an effect video B, an effect video C, an effect video D, etc. shown in the figure. Optionally, social information corresponding to each effect video is also displayed for each effect video, such as a name of a publishing user (represented by User_1, User_2, etc. in the figure), a number of likes, a number of forwarding, and so on. Further, the above effect video is an effect video generated by the user based on the observation viewing angle corresponding to the target effect component, where, more specifically, the observation viewing angle corresponding to the effect component #3 is, for example, "a viewing angle of a fly", then, for example, as shown in the figure, the effect video (the effect video frame, that is, a frame of picture in the effect video) generated based on the observation viewing angle presents the image medium uploaded by the user in a way of simulating the "viewing angle of a fly" (the "compound eye" effect of the fly is simulated by a "hexagon" in the figure), so that the effect video (the effect video frame) may display the visual effect of observing the image medium based on the "viewing angle of a fly". After that, the user clicks (the first selection operation) the confirmation component provided in the effect content page to determine the observation viewing angle corresponding to the target effect component as the target viewing angle, that is, "a viewing angle of a fly". In this embodiment, after the target effect component is triggered, the corresponding effect content page is displayed first, and multiple visual effects of the effect video generated by the observation viewing angle corresponding to the target effect component are displayed through the effect content page, thereby realizing aggregation of user-created content, improving information display efficiency, and enabling the user to match the target viewing angle of interest more quickly.

In the steps of this embodiment, an implementation scheme for determining the target viewing angle is provided, that is, the generated observation viewing angles are provided for the user to select, and one target viewing angle is determined from the generated observation viewing angles based on the user's selection. In this process, the user does not need to input description words, so that the interaction efficiency may be improved, the operation requirements for the user may be reduced, and the generation efficiency of the effect video may be improved.

Further, in a possible implementation, a preview region is provided in the effect component, and during or after the execution of step S100A, the method further includes:
displaying a recommended effect video corresponding to the effect component in the preview region of each effect component in the first page, where the recommended effect video is a video determined by sorting video attributes of each effect video among effect videos generated based on the observation viewing angle corresponding to the effect component; and the video attributes include video generation time and/or video access heat.

Referring to the introduction in the embodiments shown in Fig. 4 and Fig. 5, the preview region is a region for displaying the effect video (the effect video frame) in the effect content page corresponding to the effect component. Through the preview region, the user may observe the content in the effect content page without entering the effect content page, thereby improving the interaction efficiency. The recommended effect video corresponding to the effect component, that is, the recommended effect video in the effect content page, is displayed in the preview region. The recommended effect video is, for example, the top N effect videos in the effect content page after sorting based on the video attributes, where the video attributes are, for example, video generation time, that is, the N effect videos generated recently in the effect content page are displayed in the preview region; or, the attributes are, for example, video access heat determined by one or more of access volume, forwarding volume and collection volume, that is, the N effect videos with the greatest access heat in the effect content page are displayed in the preview region.

In this embodiment, by configuring the preview region of the effect component, the effect component may display the recommended effect video in the effect content page through the preview region, thereby further improving the interaction efficiency.

In another possible implementation, the user operation includes an input operation, and the input operation is an operation for inputting words, that is, the user determines the target viewing angle by inputting a description text, thereby realizing generation of the effect video, that is, content generation, based on the target viewing angle. Specifically, before step S101, the method further includes:
step S100B: displaying a second page, where the second page is provided with a text input component.

Correspondingly, as shown in Fig. 6, in another possible implementation, a specific implementation of step S101 includes:
step S1013: generating a target text in response to an input operation for the text input component in the second page, where the target text is configured to determine a target observation object; and
step S1014: determining the target viewing angle based on the target text.

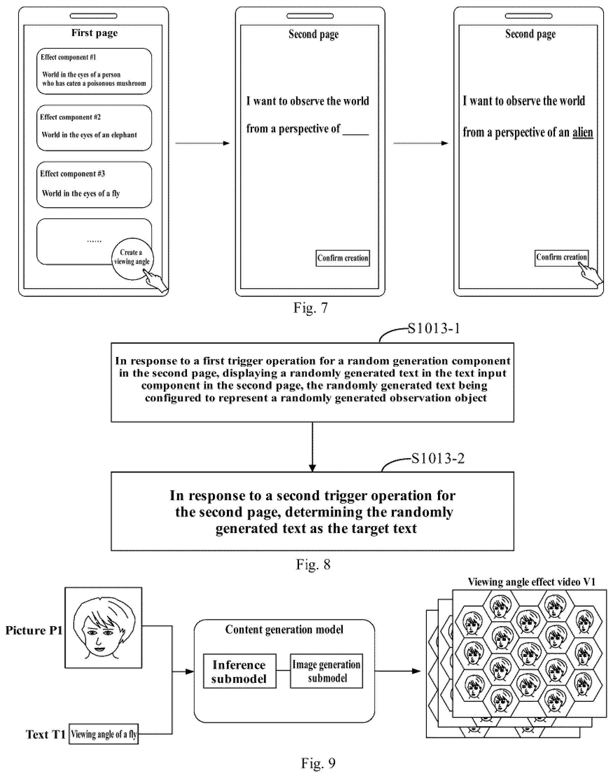

Exemplarily, in another implementation, before step S101, the second page is displayed first, and the second page is a page for receiving words input by the user. Adaptive prompt information is displayed in the second page to guide the user to input relevant words, so that the terminal device may generate the target text according to the words input by the user. The target text may be an observation object of the target observation object of the target viewing angle. Fig. 7 is a schematic diagram of a second page provided by an embodiment of the present disclosure. As shown in Fig. 7, exemplarily, the second page may be jumped from the first page, for example, as shown in the figure, a control of "creating a viewing angle" is provided in the first page, and after the user clicks the control, the second page is jumped to, and fixed prompt information is configured in the second page, such as "I want to observe the world from a perspective of _____". After that, according to the above prompt information, the user inputs "alien", that is, the target text, in the text input component (for example, the underscore "_____" position shown in the figure), and after that, after the user clicks a confirmation component, the terminal device determines that the corresponding target viewing angle is "a viewing angle of an alien" according to the target text. After that, the subsequent processing steps are executed based on the target viewing angle, until a corresponding video or picture of the input image medium observed from the viewing angle of the alien, that is, the viewing angle effect content, is generated.

Further, in a possible implementation, the input operation includes a first trigger operation and a second trigger operation, and a random generation component for randomly generating a random object with complete semantics is configured in the second page. Correspondingly, as shown in Fig. 8, a specific implementation of step S1013 includes:
step S1013-1: in response to the first trigger operation for the random generation component in the second page, displaying a randomly generated text in the text input component in the second page, where the randomly generated text is configured to represent a randomly generated observation object.
Step S1013-2: determining the randomly generated text as the target text in response to a second trigger operation for the second page.

Exemplarily, after the user triggers the random generation component in the second page through the first trigger operation, the terminal device displays the randomly generated text in the text input component in the second page, and the randomly generated text is, for example, "elephant", "fly", "alien", etc. The randomly generated text may be a word randomly selected from a pre-generated word library for storing names of observation objects, or may be a word that may represent an observation object and is randomly generated by a large language model. Further, the randomly generated text may be composed of at least two parts, where a first part is words representing an object name of the observation object, such as "elephant", "fly", etc., and a second part is restrictive words representing a state of a standard observation object, such as "moving" and "having eaten a poisonous mushroom". A specific generation mode of the randomly generated text may be set according to the needs, and is not specifically limited here. After that, in response to the second trigger operation for the second page, referring to what is shown in Fig. 7, the second trigger operation is, for example, a click operation on a "confirmation" button in the second page, the above randomly generated text is determined as the target text, and the subsequent steps are executed.

Further, after obtaining and determining the target viewing angle through the interaction process in step S101, the terminal device further acquires the image medium, and the image medium may be a picture or a video. The image medium may be stored locally in the terminal device or in the cloud, and is obtained by responding to a media selection operation of the user. Further, the image medium may be a frame of picture or a video clip, or multiple frames of pictures or multiple video clips. When the image medium is multiple frames of pictures or multiple video clips, the terminal device may acquire the multiple frames of pictures or the multiple video clips from a local or cloud media library at one time, or may acquire the multiple frames of pictures or the multiple video clips in several times in response to multiple media selection operations of the user. A specific implementation may be set according to the needs.

After that, the terminal device processes the above image medium and the target viewing angle by invoking the content generation model, that is, uses the image medium and the target viewing angle as inputs of the content generation model, and uses the video generation capability of the video generation module to generate the viewing angle effect content having the viewing angle effect of observing the image medium based on the observation viewing angle of the target observation object. The content generation model in this embodiment has semantic understanding capability, reasoning capability and video generation capability, and may understand the meaning of the input target viewing angle, reason out the visual effect of viewing an object under the target viewing angle, and generate the corresponding visual effect video in combination with the image medium based on the visual effect. The content generation model may be deployed locally in the terminal device or in the cloud. Specifically, the video generation module has the capability of understanding the target viewing angle and adding the visual effect of observing the target image based on the target viewing angle to the target image. When the image medium is a video, the video generation module adds the above viewing angle effect to at least one video frame (usually all video frames or most video frames) in the video, and/or generates a new video frame with the above viewing angle effect (i.e. video continuation), so that the processed video has the capability of representing the observation viewing angle of the target observation object. When the image medium is a picture, the video generation module generates more pictures based on the picture, so as to form a video clip (i.e. image-to-video), and makes the generated pictures have the visual effect of observing the picture based on the observation viewing angle of the target observation object, so that the processed video has the capability of representing the observation viewing angle of the target observation object.

Meanwhile, the viewing angle effect content generated based on the above steps has at least one of the following target features: a target camera movement feature, a target shot angle and a target painting style feature, where the target camera movement feature is configured to represent a shot movement law of the video frame of the viewing angle effect content; the target shot angle represents a shot angle of the video frame of the viewing angle effect content; the target painting style feature represents a frame style of the video frame of the viewing angle effect content; and the target feature is determined based on the target state or the target observation object corresponding to the target viewing angle.

Fig. 9 is a schematic diagram of generating viewing angle effect content provided by an embodiment of the present disclosure. As shown in Fig. 9, first, based on the interaction between the terminal device and the user, the terminal device acquires an image medium and a target viewing angle, where the target viewing angle may be represented in a text mode, the target viewing angle is, for example, a text T1 shown in the figure, more specifically, the content of the text T1 is, for example, "a viewing angle of a fly", and the image medium is, for example, a picture P1. After that, the terminal device inputs the above picture P1 and the text T1 into the content generation model, and the video generation mode includes an inference submodel and an image generation submodel. After being processed by the inference submodel and the image generation submodel respectively, a viewing angle effect video V1 (i.e. viewing angle effect content) is output. Referring to what is shown in the figure, first, the content feature of the effect video frame of the viewing angle effect video V1 matches the target viewing angle (i.e. "a viewing angle of a fly"), that is, the content of the picture P1 is observed by simulating the "viewing angle of a fly" (referring to the video frame P2 in the viewing angle effect video V1 in the figure, a "hexagon" is configured to represent the "compound eye" visual effect of the fly). Secondly, optionally, the viewing angle effect video V1 may also have a target painting style feature matching the target observation viewing angle, such as a "high contrast" painting style, so as to simulate and represent the world in the eyes of the target viewing angle. Thirdly, optionally, during the playing process of the viewing angle effect video V1, the viewing angle effect video V1 may also have a target camera movement feature and a target shot angle, for example, during the playing process of the viewing angle effect video V1, a visual effect of the shot shaking left and right quickly is presented in the viewing angle effect video V1, so as to simulate the behavioral feature of the target observation object; and an object is observed from a top-down viewing angle to simulate the position of the observation point of the target observation object, for example, when the observation point of the target observation object is at a high position (for example, the target observation object is an "elephant" and the target viewing angle is "a viewing angle of an elephant"), a visual effect of observing the object in the image P1 from the "top-down" viewing angle is presented in the viewing angle effect video V1.

Certainly, it may be understood that in other possible implementations, the image medium may also be a video, such as a video V0. Similar to the above process, after the text T1 and the video V0 are input into the content generation model, the content generation model performs understanding and reasoning based on the content of the text T1, and generates a corresponding viewing angle effect video (i.e. viewing angle effect content). A specific implementation process will not be repeated here.

The target viewing angle is input into the content generation model, so that the content generation model processes the image medium based on its understanding of the target viewing angle, thereby generating self-consistent, smooth and realistic viewing angle effect content, and realizing control of multiple features such as the video frame and video shot movement. It is equivalent to a result-oriented AI video generation technology, which uses the "viewing angle" to represent the "effect", thereby realizing expression of complex video effects without the need for the user to control the picture change process of video generation, thus improving the video generation efficiency and video quality.

In this embodiment, a target viewing angle is determined in response to a user operation, where the target viewing angle is configured to represent an observation viewing angle in a target state; an image medium is acquired, and a content generation model is invoked to process the image medium based on the target viewing angle to generate viewing angle effect content, where the viewing angle effect content has an effect video frame, and the effect video frame is configured to display a visual effect of observing the image medium based on the target viewing angle. A target viewing angle representing an observation viewing angle of a target observation object is determined in response to a user operation, and then an image generation model is invoked by using the target viewing angle as input to process an image medium to generate viewing angle effect content including a visual effect of observing the image medium based on the observation viewing angle of the target observation object, thereby realizing video generation based on the viewing angle dimension. In this process, the user does not need to input too complex description words, so that the efficiency of video generation may be effectively improved. Meanwhile, the generated viewing angle effect content is a video generated by the content generation model based on its understanding of the observation viewing angle of the target observation object, so that the generated video has better content consistency and higher authenticity, and the quality of the generated video is improved.

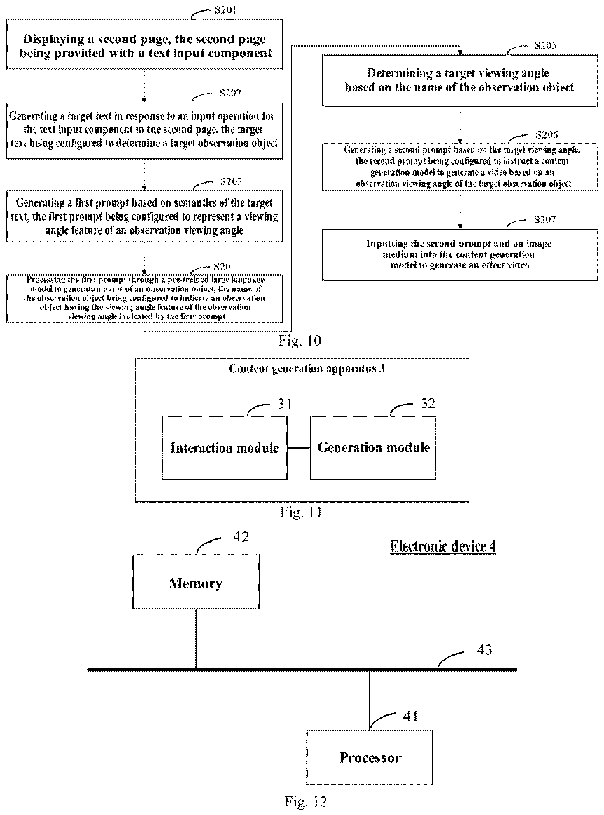

Referring to Fig. 10, Fig. 10 is a second schematic flowchart of a content generation method provided by an embodiment of the present disclosure. In this embodiment, the interaction process is further detailed on the basis of the embodiment shown in Fig. 2, and the content generation method includes:
step S201: displaying a second page, where the second page is provided with a text input component;
step S202: generating a target text in response to an input operation for the text input component in the second page, where the target text is configured to determine a target observation object;
step S203: generating a first prompt based on semantics of the target text, where the first prompt is configured to represent a viewing angle feature of an observation viewing angle; and
step S204: processing the first prompt through a pre-trained large language model to generate a name of an observation object, where the name of the observation object is configured to indicate an observation object having the viewing angle feature of the observation viewing angle indicated by the first prompt.
Step S205: determining the target viewing angle based on the name of the observation object.

Exemplarily, the second page is a text input page. Referring to the introduction of the second page in the embodiment shown in Fig. 2, after the terminal device displays the second page, the user inputs the target text by applying the input operation for the text input component in the second page, where the target text is information representing a feature of the target observation object, for example, the content of the target text is "a flying viewing angle that can see the horizon in the distance". At this time, the target text may represent some characteristics of the target observation object, but does not directly indicate a specific target observation object.

In this case, the terminal device performs semantic analysis on the target text, for example, by invoking a large language model, and generates a corresponding first prompt based on the semantics of the target text, where the first prompt is configured to represent the viewing angle feature of the observation viewing angle, for example, the first prompt generated by the above target text is "having a high-altitude viewing angle and being able to move quickly in the air,...". After that, the first prompt is processed by the pre-trained large language model to predict the observation object having the above viewing angle feature, and generate the name of the observation object, such as "drone", "bird", etc. Further, the target viewing angle is determined, such as "a viewing angle of a drone", "a viewing angle of a bird", etc.

In this embodiment, the target file input by the user is processed by combining the large language model, so as to generate the target viewing angle recommended by the model, so that the user is not limited to using the existing observation viewing angle or the common observation viewing angle to generate the viewing angle effect content, which greatly improves the diversity and flexibility of the observation viewing angle, and improves the video creation efficiency and interaction efficiency.

Step S206: generating a second prompt based on the target viewing angle, where the second prompt is configured to instruct the content generation model to generate a video based on the observation viewing angle of the target observation object.

Step S207: inputting the second prompt and the image medium into the content generation model to generate an effect video.

Further, after the target viewing angle is obtained, in a possible implementation, the target viewing angle (text) and the media data are directly input into the content generation model, and the corresponding viewing angle effect content is generated by using the reasoning capability and video generation capability of the content generation model (i.e. the implementation in the embodiment shown in Fig. 2). In another possible implementation, the second prompt may be generated first based on the target viewing angle, and then the second prompt is input into the content generation model to instruct the video generation mode to generate the corresponding video. In a possible implementation, the second prompt may be a description text generated after analyzing the characteristics of the target observation object corresponding to the target viewing angle. For example, the target viewing angle is "a viewing angle of a fly", and the corresponding target observation object is "a fly". After processing it based on the large language model, the corresponding description text is generated as "a flying insect, fast moving speed, irregular flight trajectory, compound eyes, wide field of view,...". After that, based on the above description text, a corresponding prompt template is combined to generate the second prompt, so as to instruct the content generation model to reason the visual effect of the target viewing angle based on the content of the above description text, and then generate the corresponding effect video. The solution in this embodiment is equivalent to dividing part of the reasoning capability of the content generation model to the outside, and using other language models as a supplement to the reasoning capability, thereby improving the performance of the content generation model, reducing the training cost of the content generation model, and finally achieving the purpose of improving the quality of the generated video.

Further, in a possible implementation, the second prompt includes a first word segmentation and at least one of a second word segmentation or a third word segmentation, where the first word segmentation is configured to represent the target observation object, the second word segmentation is configured to represent a height and/or a pitch angle of an observation point of the target observation object, and the third word segmentation is configured to represent a movement law of the observation point of the target observation object and/or a movement law of an observation angle. For example, the content of the second prompt is "a flying insect with compound eyes, moving height below 10 meters, irregular flight trajectory", where "flying insect with compound eyes" is the first word segmentation; "moving height below 10 meters" is the second word segmentation; "irregular flight trajectory" is the third word segmentation. The second prompt composed of one or more word segmentations is input into the content generation model, thereby realizing the purposes of controlling the frame style (the first word segmentation) of the video frame of the viewing angle effect content, controlling the shot angle (the second word segmentation) of the video frame of the viewing angle effect content, and controlling the shot movement law (the third word segmentation) of the video frame of the viewing angle effect content, so that the generated viewing angle effect content has the target feature matching the target observation object. The viewing angle effect content realizes expression of complex video effects, and in this process, the user does not need to control the picture change process of video generation, thereby improving the video generation efficiency and video quality. The specific content and expression of the target feature have been introduced in the embodiment shown in Fig. 2, and will not be repeated here.

Corresponding to the content generation method of the above embodiments, Fig. 11 is a structural block diagram of a content generation apparatus provided by an embodiment of the present disclosure. The method introduced in the above embodiments may be executed by the content generation apparatus, and the apparatus may be implemented by software and/or hardware, and the apparatus may be integrated in an electronic device with certain data processing functions. The electronic device may include, but is not limited to, a mobile terminal with big data processing capability, and a fixed terminal with big data processing capability, such as a desktop computer and a supercomputer.

For ease of description, only parts related to the embodiments of the present disclosure are shown. Referring to Fig. 11, the content generation apparatus 3 includes:
an interaction module 31 for determining a target viewing angle in response to a user operation, where the target viewing angle is configured to represent an observation viewing angle in a target state; and
a generation module 32 for acquiring an image medium, and invoking a content generation model to process the image medium based on the target viewing angle to generate viewing angle effect content, where the viewing angle effect content has an effect video frame, and the effect video frame is configured to display a visual effect of observing the image medium based on the target viewing angle.

According to one or more embodiments of the present disclosure, the user operation includes a selection operation, and the interaction module 31 is further configured for: displaying a first page, where effect components corresponding to at least two observation viewing angles are displayed in the first page; and the interaction module 31 is further configured for, when determining the target viewing angle in response to the user operation: in response to the selection operation for a target effect component in the first page, determining an observation viewing angle corresponding to the target effect component as the target viewing angle.

According to one or more embodiments of the present disclosure, the selection operation includes a first selection operation and a second selection operation, and the interaction module 31 is further configured for, when determining the observation viewing angle corresponding to the target effect component as the target viewing angle in response to the selection operation for the target effect component in the first page: in response to the second selection operation for the target effect component, displaying an effect content page corresponding to the target effect component, where at least two effect videos generated based on the observation viewing angle corresponding to the target effect component are displayed in the effect content page, and a confirmation component is provided in the effect content page; and in response to the first selection operation for the confirmation component, determining the observation viewing angle corresponding to the target effect component as the target viewing angle.

According to one or more embodiments of the present disclosure, a preview region is provided in the effect component, and the interaction module 31 is further configured for: displaying a recommended effect video corresponding to the effect component in the preview region of each effect component in the first page, where the recommended effect video is a video determined by sorting video attributes of each effect video among effect videos generated based on the observation viewing angle corresponding to the effect component; and the video attributes include video generation time and/or video access heat.

According to one or more embodiments of the present disclosure, the user operation includes an input operation, and the interaction module 31 is further configured for: displaying a second page, where the second page is provided with a text input component; and the interaction module 31 is further configured for, when determining the target viewing angle in response to the user operation: generating a target text in response to an input operation for the text input component in the second page, where the target text is configured to determine a target observation object; and determining the target viewing angle based on the target text.

According to one or more embodiments of the present disclosure, the interaction module 31 is further configured for, when determining the target viewing angle based on the target text: generating a first prompt based on semantics of the target text, where the first prompt is configured to represent a viewing angle feature of an observation viewing angle; processing the first prompt through a pre-trained large language model to generate a name of an observation object, where the name of the observation object is configured to indicate an observation object having the viewing angle feature of the observation viewing angle indicated by the first prompt; and determining the target viewing angle based on the name of the observation object.

According to one or more embodiments of the present disclosure, the input operation includes a first trigger operation and a second trigger operation, a random generation component is configured in the second page, and the interaction module 31 is further configured for, when generating the target text in response to the input operation for the text input component in the second page: in response to the first trigger operation for the random generation component in the second page, displaying a randomly generated text in the text input component in the second page, where the randomly generated text is configured to represent a randomly generated observation object; and in response to the second trigger operation for the second page, determining the randomly generated text as the target text.

According to one or more embodiments of the present disclosure, the viewing angle effect content has at least one of the following target features: a target camera movement feature, a target shot angle and a target painting style feature, where the target camera movement feature is configured to represent a shot movement law of the video frame of the viewing angle effect content; the target shot angle represents a shot angle of the video frame of the viewing angle effect content; the target painting style feature represents a frame style of the video frame of the viewing angle effect content; and the target feature is determined based on the target state or the target observation object corresponding to the target viewing angle.

According to one or more embodiments of the present disclosure, the generation module 32 is further configured for: acquiring a second prompt corresponding to the target viewing angle, where the second prompt is configured to instruct the content generation model to generate a video based on the observation viewing angle of the target observation object; and inputting the second prompt and the image medium into the content generation model to generate the effect video.

According to one or more embodiments of the present disclosure, the second prompt includes a first word segmentation and at least one of a second word segmentation or a third word segmentation, where the first word segmentation is configured to represent the target observation object, the second word segmentation is configured to represent a height and/or a pitch angle of an observation point of the target observation object, and the third word segmentation is configured to represent a movement law of the observation point of the target observation object and/or a movement law of an observation angle.

The interaction module 31 is connected to the generation module 32. The content generation apparatus 3 provided by this embodiment may execute the technical solutions of the above method embodiments, and the implementation principles and technical effects thereof are similar, and details will not be repeated here in this embodiment.

Fig. 12 is a schematic structural diagram of an electronic device provided by an embodiment of the present disclosure. As shown in Fig. 12, the electronic device 4 includes:
a processor 41 and a memory 42 communicatively connected to the processor 41,
the memory 42 stores a computer-executable instruction, and
the processor 41 executes the computer-executable instruction stored in the memory 42 to implement the content generation method in the embodiments shown in Fig. 2 to Fig. 10.

Optionally, the processor 41 and the memory 42 are connected through a bus 43.

The relevant descriptions may be understood by referring to the relevant descriptions and effects corresponding to the steps in the embodiments corresponding to Fig. 2 to Fig. 10, and details are not repeated here.

An embodiment of the present disclosure provides a computer-readable storage medium, where the computer readable storage medium stores a computer-executable instruction, and when the computer-executable instruction is executed by a processor, the content generation provided by any one of the embodiments corresponding to Fig. 2 to Fig. 10 of the present disclosure is implemented.

An embodiment of the present disclosure provides a computer program product, including a computer program, and when the computer program is executed by a processor, the content generation method provided by any one of the embodiments corresponding to Fig. 2 to Fig. 10 of the present disclosure is implemented.

In order to implement the above embodiments, an embodiment of the present disclosure further provides an electronic device.

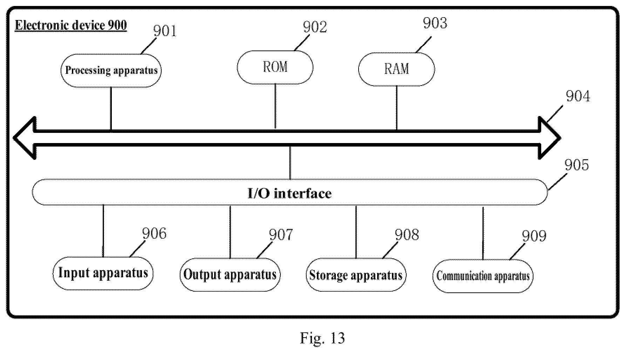

Referring to Fig. 13, it shows a schematic structural diagram of an electronic device 900 suitable for implementing the embodiments of the present disclosure, and the electronic device 900 may be a terminal device or a server. The terminal device may include, but is not limited to, a mobile terminal such as a mobile phone, a notebook computer, a digital broadcast receiver, a personal digital assistant (abbreviated as PDA), a tablet computer, a portable media player (abbreviated as PMP), a vehicle-mounted terminal (such as a vehicle navigation terminal), etc., and a fixed terminal such as a digital TV, a desktop computer, etc. The electronic device shown in Fig. 13 is only an example, and should not impose any limitation on the function and scope of use of the embodiments of the present disclosure.

As shown in Fig. 13, the electronic device 900 may include a processing apparatus (such as a central processing unit, a graphics processing unit, etc.) 901, which may perform various appropriate actions and processes according to a program stored in a read-only memory (abbreviated as ROM) 902 or a program loaded from a storage apparatus 908 into a random access memory (abbreviated as RAM) 903. The RAM 903 further stores various programs and data required for operations of the electronic device 900. The processing apparatus 901, the ROM 902 and the RAM 903 are connected to each other through a bus 904. An input/output (I/O) interface 905 is also connected to the bus 904.

Usually, the following apparatuses may be connected to the I/O interface 905: an input apparatus 906 including, for example, a touch screen, a touchpad, a keyboard, a mouse, a camera, a microphone, an accelerometer, a gyroscope, etc.; an output apparatus 907 including, for example, a liquid crystal display (abbreviated as LCD), a speaker, a vibrator, etc.; a storage apparatus 908 including, for example, a magnetic tape, a hard disk, etc.; and a communication apparatus 909. The communication apparatus 909 may allow the electronic device 900 to perform wireless or wired communication with other devices to exchange data. Although Fig. 13 shows the electronic device 900 having various apparatuses, it should be understood that it is not required to implement or have all the apparatuses shown. Alternatively, more or fewer apparatuses may be implemented or provided.

In particular, according to an embodiment of the present disclosure, the process described above with reference to the flowchart may be implemented as a computer software program. For example, an embodiment of the present disclosure includes a computer program product, which includes a computer program carried on a computer-readable medium, and the computer program contains program codes for executing the method shown in the flowchart. In such an embodiment, the computer program may be downloaded and installed from a network through the communication apparatus 909, or installed from the storage apparatus 908, or installed from the ROM 902. When the computer program is executed by the processing apparatus 901, the above-mentioned functions defined in the method of the embodiment of the present disclosure are executed.

It should be noted that the above-mentioned computer-readable medium in the present disclosure may be a computer-readable signal medium, a computer-readable storage medium, or any combination of the two. The computer-readable storage medium may be, for example, but not limited to, an electrical, magnetic, optical, electromagnetic, infrared, or semiconductor system, apparatus or device, or any combination of the above. More specific examples of the computer-readable storage medium may include, but are not limited to: an electrical connection with one or more wires, a portable computer magnetic disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the above. In the present disclosure, the computer-readable storage medium may be any tangible medium that contains or stores a program, and the program may be used by or in combination with an instruction execution system, apparatus or device. In the present disclosure, the computer-readable signal medium may include a data signal propagated in a baseband or as a part of a carrier wave, and computer-readable program codes are carried therein. The data signal propagated in this way may adopt multiple forms, including but not limited to an electromagnetic signal, an optical signal or any suitable combination of the above. The computer-readable signal medium may also be any computer-readable medium other than the computer-readable storage medium, and the computer-readable signal medium may send, propagate or transmit the program used by or in combination with the instruction execution system, apparatus or device. The program codes contained on the computer-readable medium may be transmitted by any suitable medium, including but not limited to: a wire, an optical cable, a radio frequency (RF), etc., or any suitable combination of the above.

The above computer-readable medium may be included in the above electronic device; or it may exist alone without being assembled into the electronic device.

The above computer-readable medium carries one or more programs, and when the one or more programs are executed by the electronic device, the electronic device is caused to execute the method shown in the above embodiment.

The computer program codes configured to perform the operations of the present disclosure may be written in one or more programming languages or a combination thereof, where the programming languages include object-oriented programming languages such as Java, Smalltalk, C++, and conventional procedural programming languages such as "C" language or similar programming languages. The program codes may be executed entirely on a user's computer, partly on the user's computer, as a stand-alone software package, partly on the user's computer and partly on a remote computer, or entirely on the remote computer or server. In the case of involving the remote computer, the remote computer may be connected to the user's computer through any kind of network, including a local area network (abbreviated as LAN) or a wide area network (abbreviated as WAN), or it may be connected to an external computer (for example, connected by using Internet provided by an Internet service provider).

The flowcharts and block diagrams in the drawings illustrate the possibly implemented architectures, functions and operations of the system, method and computer program product according to various embodiments of the present disclosure. In this regard, each block in the flowchart or block diagram may represent a module, program segment, or part of code, which contains one or more executable instructions for implementing the specified logical functions. It should also be noted that, in some alternative implementations, the functions marked in the blocks may also occur in an order different from that marked in the drawings. For example, two blocks shown in succession may actually be performed substantially in parallel, or they may sometimes be performed in the reverse order, depending on the functions involved. It should also be noted that each block in the block diagram and/or the flowchart, and the combination of the blocks in the block diagram and/or the flowchart may be implemented by a dedicated hardware-based system that executes specified functions or operations, or may be implemented by a combination of dedicated hardware and computer instructions.

The involved units or modules described in the embodiments of the present disclosure may be implemented by software or hardware. The name of the unit or module does not constitute a limitation on the unit itself under certain circumstances.

The functions described above herein may be performed at least partially by one or more hardware logic components. For example, without limitation, exemplary types of hardware logic components that may be used include: a field programmable gate array (FPGA), an application specific integrated circuit (ASIC), an application specific standard product (ASSP), a system on chip (SOC), a complex programmable logical device (CPLD), etc.

In the context of the present disclosure, a machine-readable medium may be a tangible medium that may contain or store a program for use by or in combination with an instruction execution system, apparatus or device. The machine-readable medium may be a machine-readable signal medium or a machine-readable storage medium. The machine-readable medium may include, but is not limited to, an electronic, magnetic, optical, electromagnetic, infrared, or semi-conductive system, apparatus or device, or any suitable combination of the above. More specific examples of the machine-readable storage medium may include an electrical connection based on one or more lines, a portable computer disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the above.

In a first aspect, according to one or more embodiments of the present disclosure, a content generation method is provided, including:
determining a target viewing angle in response to a user operation, where the target viewing angle is configured to represent an observation viewing angle in a target state; and acquiring an image medium, and invoking a content generation model to process the image medium based on the target viewing angle, to generate viewing angle effect content, where the viewing angle effect content has an effect video frame, and the effect video frame is configured to display a visual effect of observing the image medium based on the target viewing angle.

According to one or more embodiments of the present disclosure, the user operation includes a selection operation, and the method further includes: displaying a first page, where effect components corresponding to at least two observation viewing angles are displayed in the first page; and the determining a target viewing angle in response to a user operation includes: in response to the selection operation for a target effect component in the first page, determining an observation viewing angle corresponding to the target effect component as the target viewing angle.

According to one or more embodiments of the present disclosure, the selection operation includes a first selection operation and a second selection operation, and the in response to the selection operation for a target effect component in the first page, determining an observation viewing angle corresponding to the target effect component as the target viewing angle includes: in response to the second selection operation for the target effect component, displaying an effect content page corresponding to the target effect component, where at least two effect videos generated based on the observation viewing angle corresponding to the target effect component are displayed in the effect content page, and a confirmation component is provided in the effect content page; and in response to the first selection operation for the confirmation component, determining the observation viewing angle corresponding to the target effect component as the target viewing angle.

According to one or more embodiments of the present disclosure, a preview region is provided in the effect component, and the method further includes: displaying a recommended effect video corresponding to the effect component in the preview region of each effect component in the first page, where the recommended effect video is a video determined by sorting video attributes of each effect video among effect videos generated based on the observation viewing angle corresponding to the effect component; and the video attributes include video generation time and/or video access heat.

According to one or more embodiments of the present disclosure, the user operation includes an input operation, and the method further includes: displaying a second page, where the second page is provided with a text input component; and the determining a target viewing angle in response to a user operation includes: generating a target text in response to an input operation for the text input component in the second page, where the target text is configured to determine a target observation object; and determining the target viewing angle based on the target text.

According to one or more embodiments of the present disclosure, the determining the target viewing angle based on the target text includes: generating a first prompt based on semantics of the target text, where the first prompt is configured to represent a viewing angle feature of an observation viewing angle; processing the first prompt through a pre-trained large language model to generate a name of an observation object, where the name of the observation object is configured to indicate an observation object having the viewing angle feature of the observation viewing angle indicated by the first prompt; and determining the target viewing angle based on the name of the observation object.

According to one or more embodiments of the present disclosure, the input operation includes a first trigger operation and a second trigger operation, a random generation component is configured in the second page, and the generating a target text in response to an input operation for the text input component in the second page includes: in response to the first trigger operation for the random generation component in the second page, displaying a randomly generated text in the text input component in the second page, where the randomly generated text is configured to represent a randomly generated observation object; and in response to the second trigger operation for the second page, determining the randomly generated text as the target text.

According to one or more embodiments of the present disclosure, the viewing angle effect content has at least one of the following target features: a target camera movement feature, a target shot angle and a target painting style feature, where the target camera movement feature is configured to represent a shot movement law of the video frame of the viewing angle effect content; the target shot angle represents a shot angle of the video frame of the viewing angle effect content; the target painting style feature represents a frame style of the video frame of the viewing angle effect content; and the target feature is determined based on the target state or the target observation object corresponding to the target viewing angle.

According to one or more embodiments of the present disclosure, the invoking a content generation model to process the image medium based on the target viewing angle to generate viewing angle effect content includes: acquiring a second prompt corresponding to the target viewing angle, where the second prompt is configured to instruct the content generation model to generate a video based on the observation viewing angle of the target observation object; and inputting the second prompt and the image medium into the content generation model to generate the effect video.

According to one or more embodiments of the present disclosure, the second prompt includes a first word segmentation and at least one of a second word segmentation or a third word segmentation, where the first word segmentation is configured to represent the target observation object, the second word segmentation is configured to represent a height and/or a pitch angle of an observation point of the target observation object, and the third word segmentation is configured to represent a movement law of the observation point of the target observation object and/or a movement law of an observation angle.

In a second aspect, according to one or more embodiments of the present disclosure, a content generation apparatus is provided, including:
an interaction module, configured to determine a target viewing angle in response to a user operation, where the target viewing angle is configured to represent an observation viewing angle in a target state; and
a generation module, configured to acquire an image medium, and invoke a content generation model to process the image medium based on the target viewing angle, to generate viewing angle effect content, where the viewing angle effect content has an effect video frame, and the effect video frame is configured to display a visual effect of observing the image medium based on the target viewing angle.

According to one or more embodiments of the present disclosure, the user operation includes a selection operation, and the interaction module is further configured to: display a first page, where effect components corresponding to at least two observation viewing angles are displayed in the first page; and the interaction module is further configured to, when determining the target viewing angle in response to the user operation: in response to the selection operation for a target effect component in the first page, determine an observation viewing angle corresponding to the target effect component as the target viewing angle.

According to one or more embodiments of the present disclosure, the selection operation includes a first selection operation and a second selection operation, and the interaction module is further configured to, when determining the observation viewing angle corresponding to the target effect component as the target viewing angle in response to the selection operation for the target effect component in the first page: in response to the second selection operation for the target effect component, display an effect content page corresponding to the target effect component, where at least two effect videos generated based on the observation viewing angle corresponding to the target effect component are displayed in the effect content page, and a confirmation component is provided in the effect content page; and in response to the first selection operation for the confirmation component, determine the observation viewing angle corresponding to the target effect component as the target viewing angle.

According to one or more embodiments of the present disclosure, a preview region is provided in the effect component, and the interaction module is further configured to: display a recommended effect video corresponding to the effect component in the preview region of each effect component in the first page, where the recommended effect video is a video determined by sorting video attributes of each effect video among effect videos generated based on the observation viewing angle corresponding to the effect component; and the video attributes include video generation time and/or video access heat.

According to one or more embodiments of the present disclosure, the user operation includes an input operation, and the interaction module is further configured to: display a second page, where the second page is provided with a text input component; and the interaction module is further configured to, when determining the target viewing angle in response to the user operation: generate a target text in response to an input operation for the text input component in the second page, where the target text is configured to determine a target observation object; and determine the target viewing angle based on the target text.

According to one or more embodiments of the present disclosure, the interaction module is further configured to, when determining the target viewing angle based on the target text: generate a first prompt based on semantics of the target text, where the first prompt is configured to represent a viewing angle feature of an observation viewing angle; process the first prompt through a pre-trained large language model to generate a name of an observation object, where the name of the observation object is configured to indicate an observation object having the viewing angle feature of the observation viewing angle indicated by the first prompt; and determine the target viewing angle based on the name of the observation object.

According to one or more embodiments of the present disclosure, the input operation includes a first trigger operation and a second trigger operation, a random generation component is configured in the second page, and the interaction module is further configured to, when generating the target text in response to the input operation for the text input component in the second page: in response to the first trigger operation for the random generation component in the second page, display a randomly generated text in the text input component in the second page, where the randomly generated text is configured to represent a randomly generated observation object; and in response to the second trigger operation for the second page, determine the randomly generated text as the target text.

According to one or more embodiments of the present disclosure, the viewing angle effect content has at least one of the following target features: a target camera movement feature, a target shot angle and a target painting style feature, where the target camera movement feature is configured to represent a shot movement law of the video frame of the viewing angle effect content; the target shot angle represents a shot angle of the video frame of the viewing angle effect content; the target painting style feature represents a frame style of the video frame of the viewing angle effect content; and the target feature is determined based on the target state or the target observation object corresponding to the target viewing angle.

According to one or more embodiments of the present disclosure, the generation module is further configured to: acquire a second prompt corresponding to the target viewing angle, where the second prompt is configured to instruct the content generation model to generate a video based on the observation viewing angle of the target observation object; and input the second prompt and the image medium into the content generation model to generate the effect video.

According to one or more embodiments of the present disclosure, the second prompt includes a first word segmentation and at least one of a second word segmentation or a third word segmentation, where the first word segmentation is configured to represent the target observation object, the second word segmentation is configured to represent a height and/or a pitch angle of an observation point of the target observation object, and the third word segmentation is configured to represent a movement law of the observation point of the target observation object and/or a movement law of an observation angle.

In a third aspect, according to one or more embodiments of the present disclosure, an electronic device is provided, including: at least one processor and a memory,
the memory stores a computer-executable instruction, and
the at least one processor executes the computer-executable instruction stored in the memory, to cause the at least one processor to execute the content generation method according to the above first aspect and various possible designs of the first aspect.

In a fourth aspect, according to one or more embodiments of the present disclosure, a computer-readable storage medium is provided, where the computer readable storage medium stores a computer-executable instruction, and when a processor executes the computer-executable instruction, the content generation method according to the above first aspect and various possible designs of the first aspect is implemented.

In a fifth aspect, according to one or more embodiments of the present disclosure, a computer program product is provided, including a computer program, and when the computer program is executed by a processor, the content generation method according to the above first aspect and various possible designs of the first aspect is implemented.

The above description is only preferred embodiments of the present disclosure and an explanation of the applied technical principles. Those skilled in the art should understand that the scope of disclosure involved in the present disclosure is not limited to the technical solutions formed by the specific combination of the above technical features, and should also cover other technical solutions formed by any combination of the above technical features or their equivalent features without departing from the above disclosed concept. For example, the above features and the technical features provided by the present disclosure (but not limited to) with similar functions may be replaced each other to form a technical solution.

In addition, although the operations are depicted in a specific order, this should not be understood as requiring the operations to be executed in the specific order shown or in a sequential order. Under certain circumstances, multitasking and parallel processing may be beneficial. Similarly, although several specific implementation details are included in the above discussion, these should not be interpreted as limiting the scope of the present disclosure. Certain features as described in the context of separate embodiments may also be implemented in a single embodiment in combination. On the other hand, various features as described in the context of a single embodiment may also be implemented in multiple embodiments individually or in any suitable sub-combination.

Although the subject matter has been described in a language specific to structural features and/or logical actions of the method, it should be understood that the subject matter defined in the appended claims is not necessarily limited to the specific features or actions as described above. On the contrary, the specific features and actions as described above are only exemplary forms of implementing the claims.

## Claims

1. A content generation method, comprising:
determining a target viewing angle in response to a user operation (S101), wherein the target viewing angle is configured to represent an observation viewing angle in a target state; and
acquiring an image medium, and invoking a content generation model to process the image medium based on the target viewing angle, to generate viewing angle effect content (S102), wherein the viewing angle effect content has an effect video frame, and the effect video frame is configured to display a visual effect of observing the image medium based on the target viewing angle.

2. The method of claim 1, wherein the user operation comprises a selection operation, and the method further comprises:
displaying a first page, wherein effect components corresponding to at least two observation viewing angles are displayed in the first page; and
the determining the target viewing angle in response to a user operation comprises:
in response to the selection operation for a target effect component in the first page, determining an observation viewing angle corresponding to the target effect component as the target viewing angle.

3. The method of claim 2, wherein the selection operation comprises a first selection operation and a second selection operation, and the in response to the selection operation for the target effect component in the first page, determining an observation viewing angle corresponding to the target effect component as the target viewing angle comprises:
in response to the second selection operation for the target effect component, displaying an effect content page corresponding to the target effect component (S1011), wherein at least two effect videos generated based on the observation viewing angle corresponding to the target effect component are displayed in the effect content page, and a confirmation component is provided in the effect content page; and
in response to the first selection operation for the confirmation component, determining the observation viewing angle corresponding to the target effect component as the target viewing angle (S1012).

4. The method of any one of claim 2 or 3, wherein a preview region is provided in the effect component, and the method further comprises:
displaying a recommended effect video corresponding to the effect component in the preview region of each effect component in the first page,
wherein the recommended effect video is a video determined by sorting video attributes of each effect video among effect videos generated based on the observation viewing angle corresponding to the effect component; and
the video attributes comprise video generation time and/or video access heat.

5. The method of any one of claims 1 to 4, wherein the target viewing angle comprises an observation viewing angle of a target observation object, and the user operation comprises an input operation; and the method further comprises:
displaying a second page, wherein the second page is provided with a text input component; and
the determining a target viewing angle in response to the user operation comprises:
generating a target text in response to the input operation for the text input component in the second page (S1013), wherein the target text is configured to determine the target observation object; and
determining the target viewing angle based on the target text (S1014).

6. The method of claim 5, wherein the determining the target viewing angle based on the target text comprises:
generating a first prompt based on semantics of the target text, wherein the first prompt is configured to represent a viewing angle feature of an observation viewing angle;
processing the first prompt through a pre-trained model to generate a name of an observation object, wherein the name of the observation object is configured to indicate an observation object having the viewing angle feature of the observation viewing angle indicated by the first prompt; and
determining the target viewing angle based on the name of the observation object.

7. The method of claim 5, wherein the input operation comprises a first trigger operation and a second trigger operation, a random generation component is configured in the second page, and the generating the target text in response to the input operation for the text input component in the second page comprises:
in response to the first trigger operation for the random generation component in the second page (S1013-1), displaying a randomly generated text in the text input component in the second page, wherein the randomly generated text is configured to represent a randomly generated observation object; and
in response to the second trigger operation for the second page, determining the randomly generated text as the target text (S1013-2).

8. The method of any one of claims 1 to 7, wherein the viewing angle effect content has at least one of the following target features:
a target camera movement feature, a target shot angle and a target painting style feature,
wherein the target camera movement feature is configured to represent a shot movement law of a video frame of the viewing angle effect content;
the target shot angle represents a shot angle of the video frame of the viewing angle effect content;
the target painting style feature represents a frame style of the video frame of the viewing angle effect content; and
the target feature is determined based on the target state or a target observation object corresponding to the target viewing angle.

9. The method of any one of claims 1 to 8, wherein the invoking a content generation model to process the image medium based on the target viewing angle to generate viewing angle effect content comprises:
acquiring a second prompt corresponding to the target viewing angle, wherein the second prompt is configured to instruct the content generation model to generate a video based on an observation viewing angle of a target observation object; and
inputting the second prompt and the image medium into the content generation model to generate the effect video.

10. The method of claim 9, wherein the second prompt comprises a first word segmentation and at least one of a second word segmentation or a third word segmentation, wherein the first word segmentation is configured to represent the target observation object, the second word segmentation is configured to represent a height and/or a pitch angle of an observation point of the target observation object, and the third word segmentation is configured to represent a movement law of the observation point of the target observation object and/or a movement law of an observation angle.

11. A content generation apparatus (3), comprising:
an interaction module (31), configured to determine a target viewing angle in response to a user operation, wherein the target viewing angle is configured to represent an observation viewing angle in a target state; and
a generation module (32), configured to acquire an image medium, and invoke a content generation model to process the image medium based on the target viewing angle, to generate viewing angle effect content, wherein the viewing angle effect content has an effect video frame, and the effect video frame is configured to display a visual effect of observing the image medium based on the target viewing angle.

12. An electronic device (4), comprising: a processor (41) and a memory (42),
the memory (42) stores computer-executable instruction, and
the processor (41) executes the computer-executable instruction stored in the memory, to cause the processor to execute the content generation method of any of claims 1 to 10.

13. A computer-readable storage medium, wherein the computer readable storage medium stores computer-executable instruction, and when a processor executes the computer-executable instruction, the content generation method of any of claims 1 to 10 is implemented.

14. A computer program product, comprising a computer program, wherein when the computer program is executed by a processor, the content generation method of any of claims 1 to 10 is implemented.
